(19) Europäisches Patentamt / European Patent Office / Office européen des brevets

(11) **EP 3 317 610 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(21) Anmeldenummer: **16745654.0**

(22) Anmeldetag: **21.07.2016**

(51) Int Cl.:
*G01B 21/08* (2006.01)     *B05B 7/00* (2006.01)
*B05B 13/00* (2006.01)     *C23C 4/12* (2016.01)
*G01B 11/06* (2006.01)

(86) Internationale Anmeldenummer:
**PCT/EP2016/067385**

(87) Internationale Veröffentlichungsnummer:
**WO 2017/032518 (02.03.2017 Gazette 2017/09)**

(54) **BESTIMMEN DER DICKE EINER BESCHICHTUNG**

DETERMINING THE THICKNESS OF A COATING

DÉTERMINATION DE L'ÉPAISSEUR D'UN REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2015 DE 102015216096**

(43) Veröffentlichungstag der Anmeldung:
**09.05.2018 Patentblatt 2018/19**

(73) Patentinhaber: **Siemens Aktiengesellschaft**
**80333 München (DE)**

(72) Erfinder:
• **SADOVOY, Alexandr**
**14059 Berlin (DE)**
• **WITZEL, Martin**
**16547 Birkenwerder (DE)**

(56) Entgegenhaltungen:
**US-A1- 2006 246 213     US-A1- 2012 269 958**

**Beschreibung**

Die vorliegenden Erfindung betrifft ein Verfahren zum Vorherbestimmen der Dicke einer kompletten Beschichtung, die auf einem Substrat angeordnet werden soll, basierend auf dem Volumen eines Spritzflecks.

Wärmedämmende Beschichtungen für Gasturbinenbauteile erfordern eine strikte Kontrolle der Eigenschaften der Beschichtung, um den notwendigen Schutz zu gewährleisten. Eine der wichtigsten Eigenschaften ist dabei die Dicke der Beschichtung. Die nominale Dicke muss dabei sowohl bei der Entwicklung der Beschichtung und des Beschichtungsverfahrens als auch beim Aufbringen der Beschichtung unter Serienproduktionsbedingungen erreicht werden.

Beschichtungen werden häufig durch eine gleichmäßige Bewegung einer Vorrichtung zum Auftragen in parallel verlaufenden Bahnen über das Substrat aufgetragen, z.B. durch Aufsprühen mit einer Spritzkanone. Entsprechend der Bewegung der Spritzkanone wird ein Spritzmuster auf dem Substrat geformt. Ein Bereich einer Beschichtung, der durch Beschichten mit einer stehenden Spritzkanone entsteht, wird als Spritzfleck bezeichnet. Ein Spritzfleck kann damit als Bereich eines Beschichtungsmaterials verstanden werden, der zu Beginn eines Beschichtens durch Spritzen innerhalb einer bestimmten Zeitspanne an einer Stelle auf dem Substrat geformt wird. Durch die Bewegung der Spritzkanone entlang eines vordefinierten Raster-Musters am Substrat entsteht eine komplette Beschichtung. Um die Dicke der Beschichtung zu ermitteln, werden versuchsweise Beschichtungen auf Testsubstrate aufgetragen. Dabei werden u.a. die Anzahl der aufgetragenen Schichten, die Geschwindigkeit der Anordnung und die Entfernung zwischen den Bahnen, die die Anordnung über das Substrat zieht, variiert. Weiterhin können Parameter wie die Art des Prozessgases, Spannung und Strom der Anordnung, Raten des aufgetragenen Materials u.a. variiert werden, um eine gewünschte Dicke der Beschichtung zu erreichen. Nach dem Auftragen kann die Dicke der Beschichtung auf eine destruktive (z.B. metallographisch) oder nichtdestruktive Weise (z.B. 3D-Scannen oder Wirbelstrommessen) ermittelt werden. Nachteilig ist bei diesem Verfahren, dass eine komplette Beschichtung auf das Testsubstrat aufgetragen werden muss, was Zeit- und Material-aufwändig und damit unökonomisch ist.

Eine alternative Möglichkeit ist, die Dicke einer Beschichtung zu simulieren (US 2012269958). Dieses Verfahren erfordert jedoch eine komplexe Software. Darüber hinaus ist ein zuverlässiges Verfahrensmodell notwendig, um die Verfahrensparameter zu quantifizieren.

Es besteht darum die Aufgabe, ein Verfahren bereitzustellen, mit dem die Dicke einer Substratbeschichtung zuverlässig und ökonomisch im Voraus bestimmt werden kann.

Diese Aufgabe wird durch ein Verfahren mit den Merkmalen von Anspruch 1 gelöst. Weitere vorteilhafte Ausgestaltungsformen der Erfindung ergeben sich aus den Neben- und Unteransprüchen, den Figuren und den Ausführungsbeispielen.

Ein erster Aspekt der Erfindung betrifft ein Verfahren gemäß Anspruch 1 zum Bestimmen der Dicke einer Beschichtung, die auf einem Substrat aufgetragen wird.

Das Verfahren ist vorteilhaft, weil die Dicke einer Beschichtung auf der Basis des aufgesprühten Volumens eines Spritzflecks ermittelt werden kann, welches vergleichsweise einfach und kostengünstig zu bestimmen ist, da keine vollständigen Beschichtungen aufgetragen werden müssen und auch keine komplizierte Software zur Berechnung der Beschichtungsdicke erforderlich ist.

Vorzugsweise wird die Beschichtung auf einem Testsubstrat aufgetragen. Dadurch können vorteilhaft Parameter des Auftragens der Beschichtung ausgetestet und für eine bestimmte Schichtdicke optimiert werden.

Es ist ebenfalls bevorzugt, wenn die Beschichtung auf dem Substrat eines Gasturbinenbauteils aufgetragen wird. Dabei können während des Auftragens Parameter variiert werden, um die Schichtdicke zu optimieren.

Die Geschwindigkeit v der Vorrichtung zum Anordnen einer Beschichtung ist die Geschwindigkeit, mit der sich die Vorrichtung relativ zur Oberfläche des Substrats bewegt. Der Bahnversatz ist der Abstand zwischen den parallel verlaufenden Bahnen, in denen die Vorrichtung während des Anordnens über die Oberfläche des Substrats geführt wird.

Vorzugsweise werden die Bewegungsparameter Geschwindigkeit v und Bahnversatz p der Vorrichtung zum Anordnen einer Beschichtung für das Verfahren festgelegt. Das bedeutet, dass die Geschwindigkeit und der Bahnversatz der Vorrichtung zum Anordnen einer Beschichtung während des Auftragens eines Spritzflecks, dessen Volumen bestimmt werden soll, nicht verändert werden. Die Bewegungsparameter v und p der Vorrichtung zum Anordnen einer Beschichtung können zwischen verschiedenen Auftragungsvorgängen natürlich verändert werden, um ein Optimum für diese Parameter zu finden. In Bezug auf die Beschichtung werden die Begriffe Anordnen und Auftragen synonym verwendet.

Das Volumen des aufgetragenen Spritzflecks wird in dem erfindungsgemäßen Verfahren vorzugsweise durch taktile Profilometrie bestimmt. Dabei kann vorteilhaft die dreidimensionale Struktur des Spritzflecks und daraus das Volumen ermittelt werden. Es ist ebenfalls bevorzugt, dass das Volumen des aufgetragenen Spritzflecks durch optische Profilometrie bestimmt wird.

Es ist weiterhin bevorzugt, wenn in dem erfindungsgemäßen Verfahren das Volumen des aufgetragenen Spritzflecks durch eine optische 3D-Scantechnik bestimmt wird. Dabei ist es besonders bevorzugt, wenn als 3D-Scantechnik eine Streifenprojektion durchgeführt wird.

Ein zweiter Aspekt der Erfindung bezieht sich auf eine Anordnung gemäß Anspruch 9 zum Durchführen eines Verfahrens zum Bestimmen der Dicke einer Beschichtung, die auf einem Substrat aufgetragen wird.

Besonders bevorzugt ist die Vorrichtung zum Anordnen einer Beschichtung eine Spritzkanone.

Die Vorteile der erfindungsgemäßen Anordnung entsprechen denen des erfindungsgemäßen Verfahrens.

Die Erfindung wird anhand der Figuren näher erläutert. Es zeigen:

Figur 1  eine Anordnung zum Durchführen eines Verfahrens zum Vorherbestimmen der Dicke einer Beschichtung.

Figur 2  eine schematische Darstellung eines Weges, den die Vorrichtung zum Anordnen einer kompletten Beschichtung beim Beschichten relativ zum Substrat zurücklegt.

Figur 3  eine fotographische Darstellung eines Aufsprühens eines Spritzflecks eines Beschichtungsmaterials.

Figur 4  ein Fließdiagram einer Ausführungsform eines Verfahrens zum Vorherbestimmten der Dicke einer Beschichtung.

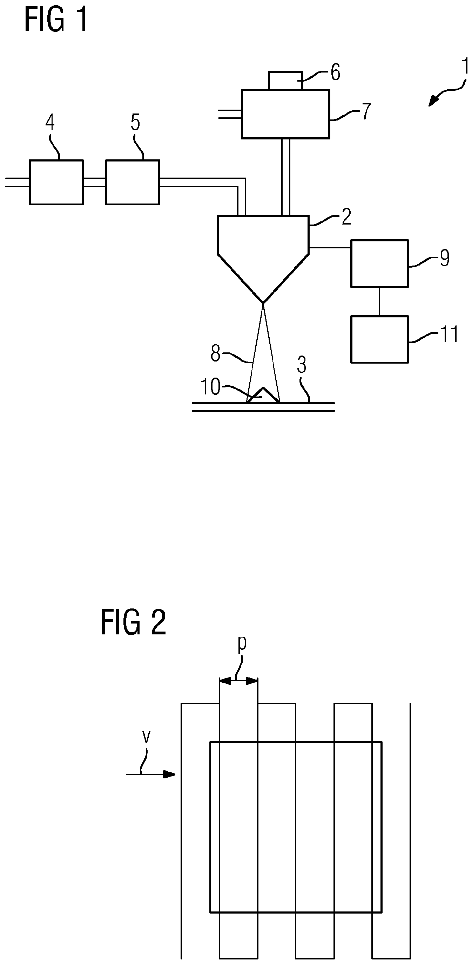

Eine Ausführungsform einer erfindungsgemäßen Anordnung 1 ist in Fig. 1 dargestellt. Die Anordnung 1 umfasst eine Vorrichtung 2 zum Anordnen einer Beschichtung, die als Spritzkanone 2 ausgeführt ist. Die Spritzkanone wird idealerweise bei einem Kaltgasspritzen zum Aufsprühen von Partikeln in einem Gasstrom auf die Oberfläche eines Substrates 3 verwendet. Dazu ist die Spritzkanone 2 mit einem Hochdruckgasbehälter 4 zum Bereitstellen von unter Hochdruck stehendem Gas, einem Gaserhitzer 5 zum Erhitzen des Gases, einem Materialbehälter 6 und einem Erhitzer 7 für ein pulverförmiges Material 8 verbunden.

Die Vorrichtung 2 zum Anordnen einer Beschichtung kann je nach Art des Auftragens anders gestaltet sein. Andere Ausführungsformen der Vorrichtung 2 zum Anordnen einer Beschichtung sind in Abhängigkeit von der Form der Vorrichtung möglich, z.B. eine Plasmadüse in Kombination mit einem Flüssigkeits- oder Pulverinjektor für ein Suspensionsplasmaspritzen, oder ein Flammrohr für ein Flammspritzen, besonders ein Pulverflammspritzen.

Die Spritzkanone 2 ist ausgebildet, beim Auftragen des Beschichtungsmaterials 8 relativ zur Oberfläche des zu beschichtenden Substrats beweglich zu sein. Dabei wird die Spritzkanone 2 in parallel verlaufenden Bahnen über die Oberfläche des zu beschichtenden Substrats geführt, wie in Fig. 2 dargestellt.

Das Substrat 3 ist eine metallische Legierung auf Eisen oder Nickelbasis, idealerweise eine metallische Superlegierung, wie sie für temperaturresistente Bauteile von Gasturbinen verwendet werden. Das Beschichtungsmaterial ist idealerweise ein pulverisiertes keramisches Material, wie es herkömmlicherweise für wärmedämmende Beschichtungen verwendet wird. Es kann aber auch eine metallische Legierung als Beschichtung aufgetragen werden, z.B. vom Typ MCrAlY.

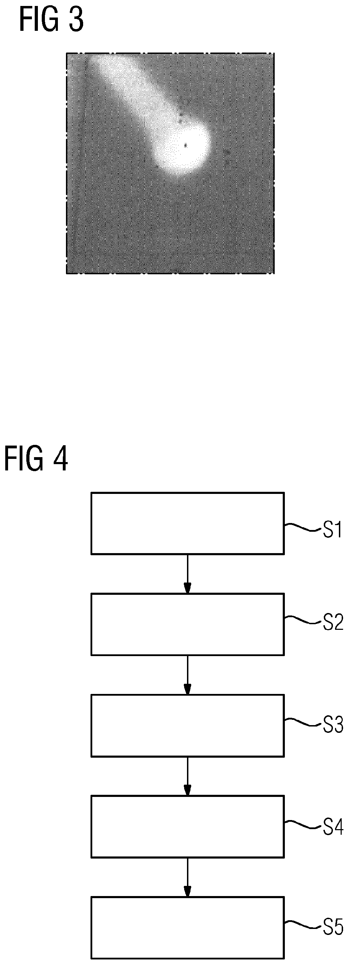

Die Spritzkanone 2 ist mit einer Steuereinrichtung 9 verbunden. Die Steuereinrichtung 9 ist ausgebildet, die Dicke eines auf der Oberfläche des Substrats 3 aufgetragenen Spritzflecks 10 auf der Basis des bestimmten Volumens zu berechnen. Der auf der Oberfläche des Substrats 3 aufgetragenen Spritzflecks 10 ist, während des Auftragens, in Fig. 3 dargestellt. Dazu ist die Steuereinrichtung 9 weiterhin mit einer Einrichtung 11 zum Bestimmen des Volumens des durch die Vorrichtung zum Anordnen einer Beschichtung 2 aufgetragenen Spritzflecks 10 verbunden. Die Einrichtung 11 kann ein Profilometer sein, das entweder taktil arbeitet und den Spritzfleck 10 abtastet, z.B. mit einer Diamantnadel, oder optisch arbeitet, z.B. mittels Konfokaltechnik oder Laserprofilometrie oder Weißlichtprofilometrie berührungslos durch optische Profilometrie bestimmt werden. Alternativ kann die Einrichtung 11 auch eine Einrichtung zum dreidimensionalen Scannen sein, die besonders ein Streifenprojektionssensor ist. Die Steuereinrichtung 9 ist ausgebildet, sowohl Steuerbefehle an die Einrichtung 11 auszugeben als auch Daten von der Einrichtung 11 aufzunehmen und weiter zu verarbeiten.

In einem Verfahren gemäß der in Fig. 4 gezeigten Ausführungsform wird in einem ersten Schritt S1 ein Substrat 3 mit einer Oberfläche bereitgestellt. Das Substrat 3 ist vorzugsweise eine metallische Flachplatte. In einem zweiten Schritt S2 wird eine Vorrichtung 2 zum Anordnen einer Beschichtung auf dem Substrat bereitgestellt. Als Vorrichtung 2 wird je nach gewünschter Form des Beschichtens eine Spritzkanone wie in Fig. 1 oder alternativ ein Flammrohr oder eine Plasmadüse bereitgestellt. In einem dritten Schritt S3 wird ein Beschichtungsmaterial angeordnet, indem das Material von der Vorrichtung 2 auf der Oberfläche des Substrats aufgetragen wird. Dabei entsteht ein Spritzfleck des aufgetragenen Materials auf der Oberfläche des Substrats. Schritt S3 wird in einer festgelegten Zeitspanne durchgeführt.

In einem vierten Schritt S4 wird das Volumen eines aufgetragenen Spritzflecks, der in einer festgelegten Zeitspanne aufgetragen wurde, bestimmt, z.B. durch taktile Profilometrie, wobei die dreidimensionale Struktur des aufgetragenen Spritzflecks mittels einer Einrichtung 11, besonders eines Profilometers durch Abtasten mit einer Nadel erfasst wird und aus der ermittelten Struktur das Volumen des aufgetragenen Spritzflecks ermittelt wird. Alternativ kann das Volumen des aufgetragenen Spritzflecks berührungslos durch optische Profilometrie bestimmt werden. In einer weiteren alternativen Ausführungsform kann in dem erfindungsgemäßen Verfahren das Volumen des gesprühten Spritzflecks durch eine optische 3D-Scantechnik bestimmt werden. Als 3D-Scantechnik kann eine Streifenprojektion mit blauem oder mit weißem Licht durchgeführt werden.

In einem fünften Schritt S5 wird die Dicke einer aufzutragenden Beschichtung auf der Basis des ermittelten Volumens des aufgetragenen Spritzflecks vorausbestimmt. Dabei wird der Wert des ermittelten Volumens in die Gleichung

$$\mathtt{h_{layer}\ =\ 1/(v*p)\ *\ \Delta V_{spot}/\Delta t}$$

eingesetzt, wobei $h_{layer}$ die Dicke der kompletten Beschichtung ist, v die Geschwindigkeit der Vorrichtung zum Anordnen einer Beschichtung, p der Bahnversatz, $\Delta V_{spot}$ das ermittelte Volumen des aufgetragenen Spritzflecks, und $\Delta t$ die für das Anordnen festgelegte Zeitspanne. Die Werte des ermittelten Volumens werden dabei an die Steuereinrichtung übermittelt, welche die erforderliche Rechenoperation durchführt.

**Patentansprüche**

1.  Verfahren zum Bestimmen der Dicke einer Beschichtung, die auf einem Substrat aufgetragen wird, umfassend die Schritte:

    - S1) Bereitstellen eines Substrats,
    - S2) Bereitstellen einer Vorrichtung zum Anordnen einer Beschichtung,
    - S3) Anordnen eines Beschichtungsmaterials,
    - S4) Bestimmen des Volumens eines aufgetragenen Spritzflecks, der in einer festgelegten Zeitspanne aufgetragen wurde,
    - S5) Berechnen der Dicke einer aufzutragenden kompletten Schicht auf der Basis des bestimmten Volumens des Spritzflecks,

    wobei die Schichtdicke nach der Gleichung

    $$\mathtt{h_{layer}\ =\ 1/(v*p)\ *\ \Delta V_{spot}/\Delta t}$$

    bestimmt wird, wobei $h_{layer}$ die Schichtdicke ist, v die Geschwindigkeit der Vorrichtung zum Anordnen einer Beschichtung relativ zur Oberfläche des zu beschichtenden Substrats, p der Bahnversatz, d.h. der Abstand zwischen den parallel verlaufenden Bahnen, in denen die Vorrichtung während des Anordnens über die Oberfläche des Substrats geführt wird, $\Delta V_{spot}$ das bestimmte Volumen des aufgetragenen Spritzflecks, und $\Delta t$ die festgelegte Zeitspanne.

2.  Verfahren nach Anspruch 1, wobei die Beschichtung auf einem Testsubstrat aufgetragen wird.

3.  Verfahren nach Anspruch 1, wobei die Beschichtung auf dem Substrat eines Gasturbinenbauteils aufgetragen wird.

4.  Verfahren nach einem der vorherigen Ansprüche, wobei die Bewegungsparameter Geschwindigkeit v und Bahnversatz p der Vorrichtung zum Anordnen einer Beschichtung für das Verfahren festgelegt werden.

5.  Verfahren nach einem der vorherigen Ansprüche, wobei das Volumen des aufgetragenen Spritzflecks durch taktile Profilometrie bestimmt wird.

6.  Verfahren nach einem der vorhergehenden Ansprüche, wobei das Volumen des aufgetragenen Spritzflecks durch optische Profilometrie bestimmt wird.

7.  Verfahren nach einem der vorhergehenden Ansprüche, wobei das Volumen des aufgetragenen Spritzflecks durch eine optische 3D-Scantechnik bestimmt wird.

8.  Verfahren nach Anspruch 7, wobei als 3D-Scantechnik eine Streifenprojektion durchgeführt wird.

**9.** Anordnung (1) zum Durchführen eines Verfahrens gemäß einem der Ansprüche 1 - 8, umfassend:

- eine Vorrichtung (2) zum Anordnen einer Beschichtung,
- eine Einrichtung (11) zum Bestimmen des Volumens eines durch die Vorrichtung zum Anordnen einer Beschichtung (2) aufgetragenen Spritzflecks (10),
- eine Steuereinrichtung (9), die zum Berechnen der kompletten Schichtdicke der Beschichtung nach der Gleichung $h_{layer} = 1/(v*p) * \Delta V_{spot}/\Delta t$ ausgebildet ist.

**10.** Anordnung nach Anspruch 9,
bei der die Vorrichtung zum Anordnen einer Beschichtung eine Spritzkanone ist.

**Claims**

**1.** Method for determining the thickness of a coating which is applied to a substrate, comprising the following steps:

- S1) preparing a substrate,
- S2) providing a device for arranging a coating,
- S3) arranging a coating material,
- S4) determining the volume of an applied spray spot applied in a fixed time span,
- S5) calculating the thickness of a complete layer that is to be applied, on the basis of the determined volume of the spray spot, wherein the layer thickness is determined by the equation

$$h_{layer} = 1/(v*p) * \Delta V_{spot}/\Delta t$$

where $h_{layer}$ is the layer thickness, v is the speed of the device for arranging a coating relative to the surface of the substrate to be coated, p is the track offset, i.e. the spacing between the parallel tracks along which the device is guided, during arranging, over the surface of the substrate, $\Delta V_{spot}$ is the determined volume of the applied spray spot, and $\Delta t$ is the fixed time span.

**2.** Method according to Claim 1,
wherein the coating is applied to a test substrate.

**3.** Method according to Claim 1,
wherein the coating is applied to the substrate of a gas turbine component.

**4.** Method according to one of the preceding claims,
wherein the movement parameters speed v and track offset p of the device for arranging a coating are fixed for the method.

**5.** Method according to one of the preceding claims,
wherein the volume of the applied spray spot is determined by tactile profilometry.

**6.** Method according to one of the preceding claims,
wherein the volume of the applied spray spot is determined by optical profilometry.

**7.** Method according to one of the preceding claims,
wherein the volume of the applied spray spot is determined by an optical 3-D scanning technique.

**8.** Method according to Claim 7,
wherein the 3-D scanning technique performed is a structured light scan.

**9.** Arrangement (1) for carrying out a method according to one of Claims 1-8, comprising:

- a device (2) for arranging a coating,
- a device (11) for determining the volume of a spray spot (10) applied by the device for arranging a coating (2),

- a control device (9), which is designed to calculate the complete layer thickness of the coating according to the equation

$$h_{layer} = 1/(v*p) * \Delta V_{spot}/\Delta t$$

**10.** Arrangement according to Claim 9,
in which the device for arranging a coating is a spray gun.

**Revendications**

**1.** Procédé de détermination de l'épaisseur d'un revêtement déposé sur un substrat, comprenant les stades :

- S1) on se procure un substrat,
- S2) on se procure une installation de mise d'un revêtement,
- S3) on met une matière de revêtement,
- S4) on détermine le volume d'une tache de projection déposée, qui a été déposée dans un laps de temps fixé,
- S5) on calcule l'épaisseur d'une couche complète à déposer sur la base du volume déterminé de la tache de projection,

dans lequel on détermine l'épaisseur de la couche par l'équation

$$h_{layer} = 1/( v*p ) * \Delta V_{spot}/\Delta t$$

dans laquelle $h_{layer}$ est l'épaisseur de la couche, v est la vitesse de l'installation pour mettre un revêtement par rapport à la surface du substrat à revêtir,
p est le décalage de trajectoire, c'est-à-dire la distance entre les trajectoires parallèles suivant lesquelles l'installation est guidée pendant qu'elle est mise sur la surface du substrat,
$\Delta V_{spot}$ est le volume déterminé de la tache de projection déposée et $\Delta t$ est le laps de temps fixé.

**2.** Procédé suivant la revendication 1,
dans lequel on dépose le revêtement sur un substrat test.

**3.** Procédé suivant la revendication 1,
dans lequel on dépose le revêtement sur le substrat d'une pièce de turbine à gaz.

**4.** Procédé suivant l'une des revendications précédentes,
dans lequel on fixe, pour le procédé, les paramètres de déplacement, vitesse v et décalage p de trajectoire, de l'installation de mise d'un revêtement.

**5.** Procédé suivant l'une des revendications précédentes,
dans lequel on détermine le volume de la tache de projection déposée par profilométrie tactile.

**6.** Procédé suivant l'une des revendications précédentes,
dans lequel on détermine le volume de la tache de projection déposée par profilométrie optique.

**7.** Procédé suivant l'une des revendications précédentes,
dans lequel on détermine le volume de la tache de projection déposée par une technique de balayage optique en 3D.

**8.** Procédé suivant la revendication 7,
dans lequel on effectue, comme technique de balayage en 3D, une projection de bande.

**9.** Système (1) pour effectuer un procédé suivant l'une des revendications 1 à 8, comprenant :

- une installation (2) de mise d'un revêtement,

- un dispositif (11) de détermination du volume d'une tache (10) de projection déposée par l'installation de mise d'un revêtement (2),
- un dispositif (9) de commande, constitué pour calculer l'épaisseur complète de couche du revêtement par l'équation

$$h_{layer} = 1/(v*p) * \Delta V_{spot}/\Delta t.$$

10. Système suivant la revendication 9,
   dans lequel l'installation de mise d'un revêtement est un canon de projection.

## FIG 1

## FIG 2

# FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012269958 A